# EUROPÄISCHE PATENTSCHRIFT

(11) **EP 2 146 871 B1**
(45) Veröffentlichungstag und Bekanntmachung des Hinweises auf die Patenterteilung: **23.12.2020**
(21) Anmeldenummer: 08715947.1
(22) Anmeldetag: 22.02.2008
(51) Int. Cl.: B60R 16/023

(54) **VERFAHREN ZUR EINSTELLUNG KONFIGURIERBARER FUNKTIONEN EINES ELEKTRONISCHEN STEUERGERÄTES IN EINEM FAHRZEUG**
METHOD FOR ADJUSTING CONFIGURABLE FUNCTIONS OF AN ELECTRONIC CONTROLLER IN A VEHICLE
PROCÉDÉ DE RÉGLAGE DE FONCTIONS CONFIGURABLES D'UN APPAREIL DE COMMANDE ÉLECTRONIQUE DANS UN VÉHICULE

(30) Priorität: 16.03.2007 DE 102007012675
(43) Veröffentlichungstag der Anmeldung: 27.01.2010
(73) Patentinhaber: WABCO GmbH, 30453 Hannover (DE)
(72) Erfinder: RISSE, Rainer, 30982 Pattensen-Reden (DE); RONNENBERG, Udo, 30900 Wedemark (DE); SCHRADER, Christian, 31228 Peine (DE); STENDER, Axel, 31787 Hameln (DE)
(86) Internationale Anmeldenummer: PCT/EP2008/001395
(87) Internationale Veröffentlichungsnummer: WO 2008/113454

(56) Entgegenhaltungen:
- EP-A- 1 498 341
- WO-A-2005/069131
- DE-A1- 19 924 122
- DE-A1-102005 015 815
- WAGNER U ET AL: "Die Instrumentenkombination im neuen 7er BMW: Anzeigephilosophhie und Technik-The instrument combination in the new BMW 7series: Philosophy of indication and technique" VDI BERICHTE. ELEKTRONIK IM KRAFTFAHRZEUG, VDI VERLAG, DUESSELDORF, DE, Nr. 1646, 27. September 2001 (2001-09-27), Seiten 941-967, XP002407240
- GEBHARDT K ET AL: "Das Opel-Diagnose-Konzept aus der Sicht des Entwicklers - Status und zukünftige Anforderungen" VDI BERICHTE, DUESSELDORF, DE, Nr. 687, 8. September 1988 (1988-09-08), Seiten 349-364, XP002333464 ISSN: 0083-5560

## Beschreibung

Die Erfindung betrifft ein Verfahren zur Einstellung konfigurierbarer Funktionen eines elektronischen Steuergeräts in einem Fahrzeug gemäß dem Patentanspruch 1.

Aus der DE 199 24 122 A1 ist ein Verfahren zur Steuerung von Betriebsfunktionen eines Fahrzeuges bekannt, bei dem durch Auswertung von Eingangsgrößen bei Auftreten bestimmter Wertekombinationen dieser Eingangsgrößen die Betriebsfunktionen ein- und ausschaltbar sind. Dabei kann die Festlegung der Wertekombination und des Schaltzustands von dem Anwender der Einrichtung ausgeführt werden.

Aus der DE 10 2005 015 815 A1 geht ein Fahrzeug-Kundenspezifizierungssystem hervor, bei dem Steuerkennwerte, die zu Funktionen von Steuereinheiten gehören, auf vom Benutzer bevorzugte Werte eingestellt werden können. Aus VDI-Bericht Nr. 687,1988, Seite 349 ff. geht das Opel-Diagnose-Konzept aus der Sicht des Entwicklers hervor. Aus einer Veröffentlichung von Ulrich Wagner et al. geht die Instrumententechnik im neuen 7er BMW, Anzeigephilosophie und Technik, hervor. Aus der WO 2005/069131 A1 geht ein Verfahren zum Setzen programmierbarer Merkmale eines Motorfahrzeugs hervor. Aus der EP 1 498 341 A1 geht ein Fahrzeug hervor, bei dem Fahrzeugcharakteristika verändert werden können.

Der Erfindung liegt die Aufgabe zugrunde, ein gegenüber dem Stand der Technik für den Anwender einfacher zu handhabendes Verfahren zur Einstellung konfigurierbarer Funktionen sowie ein dafür geeignetes Steuergerät anzugeben.

Diese Aufgabe wird durch die in den unabhängigen Patentansprüchen angegebene Erfindung gelöst. Weiterbildungen und vorteilhafte Ausgestaltungen der Erfindung sind in den Unteransprüchen angegeben.

Die Erfindung ermöglicht einem Anwender, konfigurierbare Funktionen eines elektronischen Steuergeräts in einem Fahrzeug komfortabel und mit wenig Vorkenntnissen nach Wunsch einzustellen. Mit dem Begriff "konfigurierbar" wird in diesem Zusammenhang, im Gegensatz zu dem Begriff "programmierbar", eine Art der Festlegung von Funktionen bezeichnet, bei der bestimmte Grundfunktionen und Abfrageschritte bereits herstellerseitig vordefiniert sind. Der Anwender hat dabei die Möglichkeit, aus der herstellerseitig vorgegebenen Menge an Funktionen und Abfrageschritten eine gewisse Auswahl zu treffen und diese Auswahl in einem Speicher des elektronischen Steuergeräts festzulegen. Im Gegensatz hierzu würde es die Programmierung erlauben, weitgehend beliebige Funktionen etwa aus dem Befehlssatz eines Mikroprozessors zusammenzustellen, was wesentlich komplexere Kenntnisse vom Anwender erfordern würde.

Ein weiterer Vorteil der Erfindung besteht darin, dass ein Anwender des elektronischen Steuergeräts eine gewünschte Funktion mit wenig Zeitaufwand, zum Beispiel durch Verwendung einer menügeführten Diagnose-Software, selbst definieren kann, ohne dafür kostenpflichtige fachkundige Hilfe in Anspruch zu nehmen. Hierdurch spart der Anwender Kosten und Zeit bei der Einstellung einer gewünschten Funktion des elektronischen Steuergeräts.

Ein vorteilhafter Anwendungsfall für das erfindungsgemäße Verfahren ist die Einstellung einer Zusatz-Funktion eines elektronisch gesteuerten Bremssystems für einen Nutzfahrzeuganhänger. Hierbei kann von dem Anwender beispielsweise festgelegt werden, dass unter bestimmten äußeren Bedingungen, wie Fahrgeschwindigkeit, Beladung oder Zeitkriterien, eine bestimmte Funktion des Nutzfahrzeuganhängers aktiviert wird, etwa das Anheben oder Absenken einer Liftachse.

Als Anwender des elektronischen Steuergeräts kommen beispielsweise Speditionen, Werkstätten oder auch der Fahrer des Fahrzeugs, an das der Nutzfahrzeuganhänger angekuppelt ist, in Frage.

Die Erfindung wird nachfolgend unter Nennung weiterer Vorteile anhand von Ausführungsbeispielen unter Bezugnahme auf Zeichnungen näher erläutert.

Es zeigen
- Fig. 1: einen Nutzfahrzeuganhänger mit einem elektronischen Steuergerät sowie weiterer Peripherie und
- Fig. 2 und 3: eine Bedienoberfläche einer Anwendungssoftware für ein Diagnosegerät, welche das erfindungsgemäße Verfahren verkörpert.

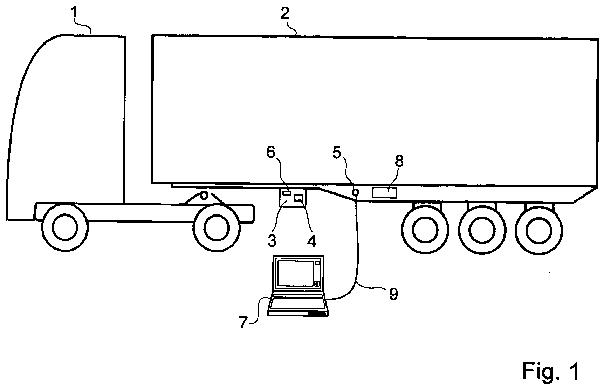

Fig. 1 zeigt einen Fahrzeugzug mit einer Zugmaschine (1) und einem Nutzfahrzeuganhänger (2) in schematisierter Darstellung. Der Nutzfahrzeuganhänger (2) ist mit einem elektronisch gesteuerten Bremssystem versehen, von dem in der Fig. 1 ein elektronisches Steuergerät (3) dargestellt ist, das zur Steuerung des Bremssystems dient. Das elektronische Steuergerät (3) weist einen Konfigurationsspeicher (4) auf, der wenigstens einen Speicherbereich aufweist, in dem die Einstellung der konfigurierbaren Funktionen speicherbar ist.

Das elektronische Steuergerät (3) weist eine Schnittstelle zu einem externen Rechner auf. Die Schnittstelle ist in der Fig. 1 als elektrischer Steckanschluss (5) dargestellt, der über eine elektrische Leitung mit dem elektronischen Steuergerät (3) verbunden ist. An den Steckverbinder (5) ist über eine elektrische Leitung (9) ein externer Rechner (7) angeschlossen. Der externe Rechner (7) kann beispielsweise als handelsüblicher Personal Computer oder Laptop ausgebildet sein. Es kann sich auch um ein Diagnosegerät für die Fahrzeugdiagnose handeln. Auf dem Rechner (7) ist eine Anwendungssoftware gespeichert. Die Anwendungssoftware ist zur Ausführung des erfindungsgemäßen Verfahrens, wie in den Patentansprüchen angegeben, programmiert.

Weiterhin ist der Nutzfahrzeuganhänger (2) mit einer Bedieneinrichtung (8) versehen, mittels der verschiedene Funktionen des Nutzfahrzeuganhängers (2), etwa die Niveauverstellung, manuell beeinflusst werden können. Das Bediengerät (8) ist über elektrische Verbindungen mit dem elektronischen Steuergerät (3) sowie mit even-tuell weiteren vorhandenen Steuergeräten in dem Nutzfahrzeuganhänger (2) zum Datenaustausch verbunden.

In dem elektronischen Steuergerät (3) ist herstellerseitig eine Kette logischer Funktionen implementiert. Diese Implementierung erfolgt als dauerhafte Programmierung des Steuergerätes, die von dem Anwender nicht geändert werden kann. In dem elektronischen Steuergerät (3) werden außerdem Signale von Digital- und Analogeingängen eingelesen. Der Anwender kann für die Festlegung der Eingangssignale einer konfigurierbaren Funktion aus diesen Digital- und/oder Analogeingängen auswählen. Ein ausgewähltes Eingangssignal wird aufgrund der fest programmierten Funktionskette mit einem Geschwindigkeitskriterium logisch verknüpft. Der Anwender hat die Möglichkeit, bezüglich des Geschwindigkeitskriteriums eine Geschwindigkeitsschwelle sowie das Merkmal einer Über- oder Unterschreitung dieser Geschwindigkeitsschwelle zu konfigurieren. In der fest programmierten Funktionskette ist sodann ein vom Anwender konfigurierbares Zeitkriterium (Zeitglied) vorgesehen, bei dem der Anwender einen Zeitwert festlegen kann. Die fest programmierte Funktionskette sieht weiterhin vor, dass bei Vorliegen der Verknüpfung der konfigurierten Eingangssignal-Kriterien für die durch den Zeitwert festgelegte Dauer nach Wahl des Anwenders ein Ausgangssignal ein- bzw. ausgeschaltet oder invertiert wird. Mit diesem Ausgangssignal kann beispielsweise ein an einem Signalausgang des elektronischen Steuergeräts angeschlossenes Relais oder Ventil betätigt werden. Weiterhin sieht die fest programmierte Funktionskette vor, dass das Ausgangssignal für eine gewisse Maximalzeit ausgegeben wird, dass heißt eine Zeitbegrenzung von dem Anwender konfiguriert werden kann. Weiterhin kann der Anwender durch die Festlegung einer weiteren Geschwindigkeitsschwelle festlegen, dass das Ausgangssignal wahlweise oberhalb oder unterhalb der festgelegten weiteren Geschwindigkeitsschwelle ausgegeben wird.

Statt der Ausgabe des Ausgangssignals, oder zusätzlich zur Ausgabe des Ausgangssignals, kann der Anwender auch die Speicherung von Betriebsdaten des Fahrzeuges bzw. von Komponenten des Fahrzeuges in dem elektronischen Steuergerät bei Auftreten eines sogenannten Ereignisses konfigurieren. Hierfür sieht das elektronische Steuergerät einen sogenannten Ereignisspeicher vor, dessen Funktion und Verwaltung nachfolgend noch näher beschrieben wird.

In einer vorteilhaften Ausgestaltung sieht die fest programmierte Funktionskette in dem Steuergerät des Nutzfahrzeuganhängers den Vergleich konfigurierbarer Eingangsgrößen mit weiteren Bedingungen bzw. Größen vor, wobei für den Vergleich ein Größer-Kriterium, ein Kleiner-Kriterium, ein Gleich-Kriterium sowie Geschwindigkeits- und Zeitkriterien vom Anwender auswählbar sind.

Das Ausgangssignal, das z.B. ein Schaltsignal sein kann, kann über einen Ausgangsanschluss des elektronischen Steuergeräts ausgegeben werden. Das Ausgangssignal kann auch als Datensignal über einen Datenbus, etwa einen CAN-Datenbus oder eine PLC-Schnittstelle (PLC = Powerline Communication), zu anderen in dem Fahrzeug vorgesehenen elektronischen Systemen übermittelt werden.

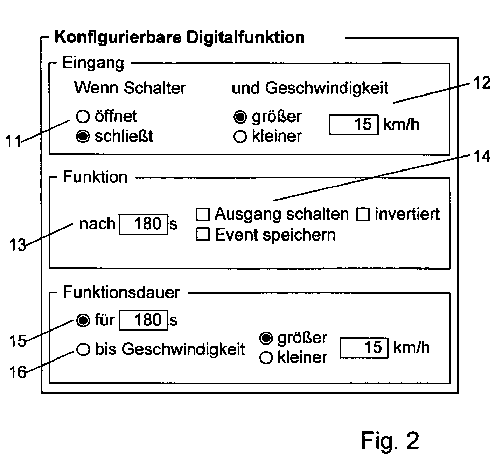

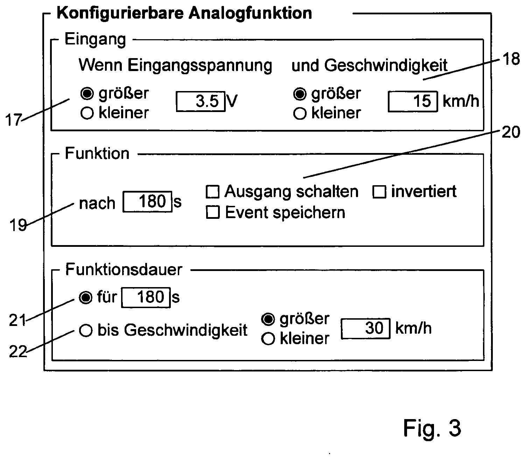

Die Konfiguration der zuvor beschriebenen fest programmierten Funktionskette kann vom Anwender über eine geeignete Bedienoberfläche eines Diagnosegerätes komfortabel und übersichtlich eingestellt werden. Zwei Ausführungsbeispiele für die Darstellung auf einem Diagnosegerät sind in den Figuren 2 und 3 angegeben. In der Figur 2 ist ein erstes Beispiel dargestellt, bei dem vom Anwender in einem Funktionsblock (11) als Eingangssignal ein Digitaleingang, nämlich ein Schaltsignal mit den beiden Zuständen "Offen" und "Geschlossen", ausgewählt wurde. Für dieses Schaltsignal kann der Anwender eine sog. Triggerbedingung festlegen, d.h. eine Bedingung, die vom Steuergerät als ein Kriterium für das Auftreten des Schaltsignals interpretiert werden soll. Im vorliegenden Beispiel kann der Anwender als Triggerbedingung entweder das Öffnen oder das Schließen des Schalters auswählen. Gemäß Figur 2 wurde das "Schließen" als Triggerbedingung ausgewählt. In einem Funktionsblock (12) kann der Anwender als zweite Triggerbedingung ein Geschwindigkeitskriterium konfigurieren. Dabei ist zunächst eine Geschwindigkeitsschwelle (im Beispiel 15 km/h) definierbar. Weiterhin ist auswählbar, ob die Triggerbedingung ausgelöst wird, wenn die Fahrzeug-Geschwindigkeit entweder die definierte Geschwindigkeitsschwelle überschreitet oder alternativ unterschreitet. In der fest programmierten Funktionskette, die in dem Steuergerät vorgesehen ist, ist weiterhin vorgesehen, dass die Triggerbedingungen gemäß Funktionsblock (11) und Funktionsblock (12) miteinander logisch UND-verknüpft werden. Dies bedeutet, dass eine resultierende Triggerbedingung als Ergebnis erzeugt wird, die nur dann ausgelöst wird, wenn die beiden einzelnen Triggerbedingungen gemäß Funktionsblock (11) und Funktionsblock (12) ausgelöst wurden. Das Ergebnis dieser UND-Verknüpfung wird sodann einem Zeitglied zugeführt. Für dieses Zeitglied kann der Anwender in einem Funktionsblock (13) eine Mindestzeit definieren. Dies bedeutet, dass die resultierende Triggerbedingung der UND-Verknüpfung erst auf nachfolgende Funktionsblöcke Wirkung entfaltet, wenn sie für die Dauer der definierten Mindestzeit vorgelegen hat. Sofern die resultierende Triggerbedingung nicht für die vorgegebene Mindestzeit vorliegt, erfolgt keine Weitergabe an nachfolgende Funktionsblöcke, dass heißt die resultierende Triggerbedingung wird verworfen. Sofern die Mindestzeit erreicht wurde, wird eine von dem Anwender in einem Funktionsblock (14) festlegbare Aktion ausgeführt. Wie erläutert, kann beispielsweise ein Ausgangssignal erzeugt werden. Hierfür kann der Anwender in dem Funktionsblock (14) auswählen, ob ein dafür vorgesehener Ausgangsanschluß des elektronischen Steuergeräts invertiert werden soll. Alternativ oder zusätzlich kann die Speicherung eines Ereignisses ausgewählt werden. In einem Funktionsblock (15) kann der Anwender definieren, für welche Mindestzeitdauer die Ausgabe des Ausgangssignals erfolgen soll. Alternativ kann der Anwender in einem Funktionsblock (16) definieren, ob das Ausgangssignal wahlweise unterhalb oder oberhalb einer bestimmten Fahrzeug-Geschwindigkeit ausgegeben werden soll. Hierbei ist eine Geschwindigkeitsschwelle von dem Anwender wählbar.

In dem weiteren Beispiel gemäß Figur 3 wird in einem Funktionsblock (17) statt eines Digital-Eingangssignals ein Analog-Eingangssignal ausgewählt, nämlich eine Eingangsspannung. Für dieses Analog-Eingangssignal kann der Anwender einen Schwellenwert festlegen, und außerdem, ob als Triggerbedingung ein Überschreiten oder ein Unterschreiten des Schwellenwertes gelten soll. Die Triggerbedingung gemäß dem Funktionsblock (17) wird, wie bereits anhand der Figur 2 erläutert, mit einem in dem Funktionsblock (18) definierten Geschwindigkeitskriterium UND-verknüpft, und in einem Funktionsblock (19) auf eine Mindestzeit hin geprüft. Die weiteren in der Figur 3 dargestellten vom Anwender konfigurierbaren Funktionsblöcke (20, 21, 22) entsprechen den zuvor erläuterten Funktionsblöcken (14, 15, 16).

Als auswählbare Analog-Eingangssignale sind beispielsweise der Bremsdruck, die Fahrzeugbeladung bzw. die Achslast, der Kilometerstand oder Datum und Uhrzeit auswählbar. Über ein weiteres universell verwendbares Analog- Eingangssignal kann ein elektrisches Spannungssignal eingelesen werden. Hierüber sind vom Anwender beliebig definierbare Analog-Eingangsgrößen auswählbar, indem geeignete Sensoren angeschlossen werden, die ein Spannungssignal als Ausgangsignal liefern.

Die Digital- und Analog-Eingangssignale können außerdem von einem Datenbus, etwa einem CAN- oder PLC-Datenbus, empfangen werden.

Das erfindungsgemäße Verfahren kann vorteilhaft auch mit einem elektronischen Steuergerät (3) ausgeführt werden, in dem die oben beschriebene Kette logischer Funktionen nicht herstellerseitig fest implementiert ist, sondern in dem eine Parametrierung, Programmierung oder Konfiguration mit größeren Freiheitsgraden einspeicherbar ist. In diesem Fall erfolgt die erfindungsgemäße Vereinfachung der Handhabung zur Einstellung der konfigurierbaren Funktionen durch entsprechend angepasste Programmierung der Anwendungssoftware für das Diagnosegerät, d.h. die Kette logischer Funktionen ist dann in der Anwendungssoftware implementiert.

Das Steuergerät weist außerdem einen Ereignisspeicher (6) auf, in dem unter anderem in Abhängigkeit von den zuvor erläuterten konfigurierbaren Funktionen Ereignisse speicherbar sind. Unter einem Ereignis wird eine definierte Kombination von Eingangssignalen und/oder internen Signalen und/oder Ausgangssignalen des Steuergeräts verstanden, bei deren Auftreten ebenfalls zuvor definierte Eingangssignale und/oder interne Signale und/oder Ausgangssignale des Steuergerätes als Daten in dem Ereignisspeicher (6) abgespeichert werden. Die Speicherung kann dabei bei Auftreten eines Ereignisses einmalig oder nach Wahl für eine bestimmte Zeitdauer oder eine bestimmte Anzahl von Datensätzen erfolgen. Der Ereignisspeicher (6) ist vorteilhaft als Ringspeicher ausgelegt, das heißt dass die zuerst gespeicherten Daten, also die ältesten Daten, mit neu zu speichernden Daten überschrieben werden, wenn der Speicher voll ist.

Gemäß einer vorteilhaften Ausgestaltung der Erfindung sind die Kriterien, gemäß denen eine Speicherung von Ereignissen stattfinden soll, vom Anwender als Verknüpfung einer Auswahl von Eingangssignalen, internen Signalen und/oder Ausgangssignalen konfigurierbar. Hierdurch kann eine Vielzahl von auslösenden Situationen vom Anwender eingestellt werden, was eine Funktionsüberprüfung des Nutzfahrzeuganhängers in der Werkstatt erleichtert und Hinweise auch auf nur temporär auftretende Defekte (zum Beispiel einen Wackelkontakt) geben kann. Hierdurch kann auf einfache Weise die Fahrzeug-Betriebssicherheit verbessert werden.

Gemäß einer vorteilhaften Ausgestaltung kann als internes Signal zur Auslösung einer Ereignisspeicherung ein Regelungseingriff, zum Beispiel ein Eingriff der ABS-Regelung oder ein automatischer Bremseneingriff zur Vermeidung des Umkippens des Fahrzeugs, vom Anwender gewählt werden. Weitere auswählbare interne Signale sind die Aktivierung einer Warnlampe oder das Auftreten einer Fehlererkennung des elektronischen Steuergerätes.

Die bei einer Ereignisspeicherung zu speichernden Daten können ebenfalls vom Anwender konfiguriert werden. Zur Auswahl stehen beispielsweise Uhrzeit und Datum, Kilometerstand, Fahrgeschwindigkeit, Bremsdruck, Beladung, Gesamtmasse des Nutzfahrzeuganhängers, sowie weitere vom Anwender definierbare Größen, die als Eingangssignale dem elektronischen Steuergerät zur Verfügung stehen.

In Verbindung mit einem Reifendruck-Überwachungssystem steht als zu speicherndes oder auslösendes Signal noch der Reifendruck einzelner Räder oder der kleinste Reifendruck-Wert aller Räder zur Verfügung.

## Patentansprüche

1. Verfahren zur Einstellung konfigurierbarer Funktionen eines elektronischen Steuergeräts in einem Fahrzeug, wobei die konfigurierbaren Funktionen die Ausgabe eines durch die Konfiguration festlegbaren Ausgangssignals in Abhängigkeit von konfigurierbaren Eingangssignalen umfassen, derart, dass die zur Bestimmung des Ausgangssignals zu berücksichtigenden Eingangssignale einer konfigurierbaren Funktion aus einem Angebot von Eingangssignalen des elektronischen Steuergeräts vom Anwender auswählbar sind, wobei das Ausgangssignal mittels konfigurierbarer Verknüpfungen zwischen den Eingangssignalen von einer Rechnereinrichtung automatisch ermittelt wird, und wobei mittels der Konfiguration einem Eingangssignal ein Zeitkriterium zugeordnet werden kann und die Bestimmung des Ausgangssignals unter Berücksichtigung des Zeitkriteriums erfolgt.

2. Verfahren nach Anspruch 1, **dadurch gekennzeichnet, dass** das Zeitkriterium derart festlegbar ist, dass zur Einflussnahme auf das Ausgangssignal das Eingangssignal für eine festlegbare Mindest- oder Höchstzeitdauer einen vorbestimmten Wert bzw. einen vorbestimmten Wertebereich aufweisen muss.

3. Verfahren nach wenigstens einem der vorhergehenden Ansprüche, **dadurch gekennzeichnet, dass** die Festlegung der zu berücksichtigenden Eingangssignale, die Verknüpfungen sowie das Verhalten des Ausgangssignals durch Eingaben auf einem Diagnosegerät erfolgen und in dem elektronischen Steuergerät gespeichert werden.

4. Verfahren nach wenigstens einem der vorhergehenden Ansprüche, **dadurch gekennzeichnet, dass** das Ausgangssignal gemäß einem Zeitkriterium auf einen früheren Wert zurückgesetzt wird.

5. Verfahren nach einem der vorhergehenden Ansprüche, **dadurch gekennzeichnet, dass** das Ausgangssignal gemäß einem Geschwindigkeitskriterium auf einen früheren Wert zurückgesetzt wird.

6. Verfahren nach einem der vorhergehenden Ansprüche, **dadurch gekennzeichnet, dass** Betriebsdaten des Fahrzeuges bzw. von Komponenten des Fahrzeuges in dem elektronischen Steuergerät abspeicherbar sind.

7. Verfahren nach Anspruch 6, **dadurch gekennzeichnet, dass** als Betriebsdaten Eingangssignale und/oder interne Signale und/oder Ausgangssignale des Steuergerätes speicherbar sind, wobei das die Speicherung auslösende Ereignis von einem Anwender als Verknüpfung einer Auswahl von Eingangssignalen und/oder internen Signalen und/oder Ausgangssignalen konfigurierbar ist.

8. Verfahren nach einem der Ansprüche 6 oder 7, **dadurch gekennzeichnet, dass** die zu speichernden Betriebsdaten von einem Anwender konfigurierbar sind.

9. Verfahren nach einem der Ansprüche 7 oder 8, **dadurch gekennzeichnet, dass** als Ereignis ein Regelungseingriff, ein automatischer Bremseneingriff einer Regelungsfunktion in dem Fahrzeug, die Aktivierung einer Warnlampe oder eine Fehlermeldung konfigurierbar ist.

10. Diagnosegerät (7) mit einer Anwendungssoftware zur Ausführung des Verfahrens zur Einstellung konfigurierbarer Funktionen eines elektronischen Steuergeräts in einem Fahrzeug nach einem der vorhergehenden Ansprüche, wobei die konfigurierbaren Funktionen die Ausgabe eines durch die Konfiguration festlegbaren Ausgangssignals in Abhängigkeit von konfigurierbaren Eingangssignalen umfassen, derart, dass die zur Bestimmung des Ausgangssignals zu berücksichtigenden Eingangssignale einer konfigurierbaren Funktion aus einem Angebot von Eingangssignalen des elektronischen Steuergeräts vom Anwender auswählbar sind, wobei das Ausgangssignal mittels konfigurierbarer Verknüpfungen zwischen den Eingangssignalen von einer Rechnereinrichtung automatisch ermittelt wird, und wobei mittels der Konfiguration einem Eingangssignal ein Zeitkriterium und/oder ein Geschwindigkeitskriterium zugeordnet werden kann und die Bestimmung des Ausgangssignals unter Berücksichtigung des Zeitkriteriums erfolgt.

11. Elektronisches Steuergerät (3) mit einer herstellerseitig implementierten Kette logischer Funktionen, die mit dem Verfahren zur Einstellung konfigurierbarer Funktionen eines elektronischen Steuergeräts in einem Fahrzeug nach einem der vorhergehenden Ansprüche konfigurierbar sind, wobei die konfigurierbaren Funktionen die Ausgabe eines durch die Konfiguration festlegbaren Ausgangssignals in Abhängigkeit von konfigurierbaren Eingangssignalen umfassen, derart, dass die zur Bestimmung des Ausgangssignals zu berücksichtigenden Eingangssignale einer konfigurierbaren Funktion aus einem Angebot von Eingangssignalen des elektronischen Steuergeräts vom Anwender auswählbar sind, wobei das Ausgangssignal mittels konfigurierbarer Verknüpfungen zwischen den Eingangssignalen von einer Rechnereinrichtung automatisch ermittelt wird, und wobei mittels der Konfiguration einem Eingangssignal ein Zeitkriterium und/oder ein Geschwindigkeitskriterium zugeordnet werden kann und die Bestimmung des Ausgangssignals unter Berücksichtigung des Zeitkriteriums erfolgt.

12. Elektronisches Steuergerät (3) für ein Fahrzeug mit einem Speicher (6) zum Abspeichern von Betriebsdaten des Fahrzeuges bzw. von Komponenten des Fahrzeuges, **dadurch gekennzeichnet, dass** als Betriebsdaten Eingangssignale und/oder interne Signale und/oder Ausgangssignale des Steuergerätes speicherbar sind, wobei das die Speicherung auslösende Ereignis von einem Anwender als Verknüpfung einer Auswahl von Eingangssignalen und/oder internen Signalen und/oder Ausgangssignalen konfigurierbar ist.

13. Elektronisches Steuergerät (3) nach Anspruch 12, **dadurch gekennzeichnet, dass** die zu speichernden Betriebsdaten von einem Anwender konfigurierbar sind.

14. Elektronisches Steuergerät (3) nach Anspruch 12 oder 13, **dadurch gekennzeichnet, dass** als Ereignis ein Regelungseingriff, ein automatischer Bremseneingriff einer Regelungsfunktion in dem Fahrzeug, die Aktivierung einer Warnlampe oder eine Fehlermeldung konfigurierbar ist.

15. Elektronisches Steuergerät (3) nach einem der Ansprüche 11 bis 14, **dadurch gekennzeichnet, dass** das Steuergerät (3) Teil einer Bremsanlage einer Zugmaschine (1) oder eines Nutzfahrzeuganhängers (2) ist.

## Claims

1. Method for adjusting configurable functions of an electronic controller in a vehicle, with the configurable functions comprising the output of an output signal, which can be defined by the configuration, as a function of configurable input signals in such a way that the input signals of a configurable function to be taken into consideration for determining the output signal can be selected by the user from a range of input signals of the electronic controller, with the output signal being automatically determined by a computer device by means of configurable combinations between the input signals, and it being possible for a time criterion to be associated with an input signal by means of the configuration, and the output signal being determined taking into account the time criterion.

2. Method according to Claim 1, **characterized in that** the time criterion can be defined in such a way that the input signal for a definable minimum or maximum time period has to have a predetermined value or a predetermined value range in order to influence the output signal.

3. Method according to at least one of the preceding claims, **characterized in that** the definition of the input signals to be taken into consideration, the combinations and the behaviour of the output signal are performed by inputs on a diagnosis unit and are stored in the electronic controller.

4. Method according to at least one of the preceding claims, **characterized in that** the output signal is reset to a previous value in accordance with a time criterion.

5. Method according to one of the preceding claims, **characterized in that** the output signal is reset to a previous value in accordance with a speed criterion.

6. Method according to one of the preceding claims, **characterized in that** operating data of the vehicle or of components of the vehicle can be stored in the electronic controller.

7. Method according to Claim 6, **characterized in that** input signals and/or internal signals and/or output signals of the controller can be stored as operating data, it being possible for the event which triggers storage to be configured by a user as a combination of a selection of input signals and/or internal signals and/or output signals.

8. Method according to either of Claims 6 and 7, **characterized in that** the operating data to be stored can be configured by a user.

9. Method according to either of Claims 7 and 8, **characterized in that** a regulation intervention, an automatic braking intervention of a regulation function in the vehicle, the activation of a warning lamp or a fault message can be configured as the event.

10. Diagnosis unit (7) having application software for executing the method for adjusting configurable functions of an electronic controller in a vehicle according to one of the preceding claims, with the configurable functions comprising the output of an output signal, which can be defined by the configuration, as a function of configurable input signals in such a way that the input signals of a configurable function to be taken into consideration for determining the output signal can be selected by the user from a range of input signals of the electronic controller, with the output signal being automatically determined by a computer device by means of configurable combinations between the input signals, and it being possible for a time criterion and/or a speed criterion to be associated with an input signal by means of the configuration, and the output signal being determined taking into account the time criterion.

11. Electronic controller (3) having a chain of logic functions which are implemented by the manufacturer and can be configured using the method for adjusting configurable functions of an electronic controller in a vehicle according to one of the preceding claims, with the configurable functions comprising the output of an output signal, which can be defined by the configuration, as a function of configurable input signals in such a way that the input signals of a configurable function to be taken into consideration for determining the output signal can be selected by the user from a range of input signals of the electronic controller, with the output signal being automatically determined by a computer device by means of configurable combinations between the input signals, and it being possible for a time criterion and/or a speed criterion to be associated with an input signal by means of the configuration, and the output signal being determined taking into account the time criterion.

12. Electronic controller (3) for a vehicle having a memory (6) for storing operating data of the vehicle or of components of the vehicle, **characterized in that** input signals and/or internal signals and/or output signals of the controller can be stored as operating data, it being possible for the event which triggers storage to be configured by a user as a combination of a selection of input signals and/or internal signals and/or output signals.

13. Electronic controller (3) according to Claim 12, **characterized in that** the operating data to be stored can be configured by a user.

14. Electronic controller (3) according to Claim 12 or 13, **characterized in that** a regulation intervention, an automatic braking intervention of a regulation function in the vehicle, the activation of a warning lamp or a fault message can be configured as the event.

15. Electronic controller (3) according to one of Claims 11 to 14, **characterized in that** the controller (3) is part of a brake system of a tractor unit (1) or of a commercial vehicle trailer (2).

## Revendications

1. Procédé de réglage de fonctions configurables d'un appareil de commande électronique dans un véhicule, dans lequel les fonctions configurables comprennent la fourniture en sortie d'un signal de sortie qui peut être déterminé par la configuration en fonction de signaux d'entrée configurables, de telle sorte que des signaux d'entrée d'une fonction configurable à prendre en compte pour déterminer le signal de sortie peuvent être sélectionnés par l'utilisateur parmi une gamme de signaux d'entrée de l'appareil de commande électronique, dans lequel le signal de sortie est déterminé automatiquement par un dispositif informatique au moyen de combinaisons configurables entre les signaux d'entrée, et dans lequel un critère de temps peut être associé à un signal d'entrée au moyen de la configuration, et la détermination du signal de sortie est effectuée en tenant compte du critère de temps.

2. Procédé selon la revendication 1, **caractérisé en ce que** le critère de temps peut être déterminé de telle sorte que, pour influencer le signal de sortie, le signal d'entrée doit avoir une valeur prédéterminée ou une plage de valeurs prédéterminée pendant une période de temps minimale ou maximale pouvant être déterminée.

3. Procédé selon au moins l'une des revendications précédentes, **caractérisé en ce que** la détermination des signaux d'entrée à prendre en compte, les combinaisons ainsi que le comportement du signal de sortie sont définis par des saisies effectuées sur un dispositif de diagnostic et sont stockés dans l'unité de commande électronique.

4. Procédé selon au moins l'une des revendications précédentes, **caractérisé en ce que** le signal de sortie est réinitialisé à une valeur antérieure selon un critère de temps.

5. Procédé selon l'une des revendications précédentes, **caractérisé en ce que** le signal de sortie est réinitialisé à une valeur antérieure selon un critère de vitesse.

6. Procédé selon l'une des revendications précédentes, **caractérisé en ce que** des données de fonctionnement du véhicule ou de composants du véhicule peuvent être stockées dans l'appareil de commande électronique.

7. Procédé selon la revendication 6, **caractérisé en ce que** des signaux d'entrée et/ou des signaux internes et/ou des signaux de sortie de l'appareil de commande peuvent être stockés en tant que données de fonctionnement, dans lequel l'événement déclenchant le stockage est configurable par un utilisateur sous la forme d'une combinaison d'une sélection de signaux d'entrée et/ou de signaux internes et/ou de signaux de sortie.

8. Procédé selon l'une des revendications 6 ou 7, **caractérisé en ce que** les données de fonctionnement devant être stockées sont configurables par un utilisateur.

9. Procédé selon l'une des revendications 7 ou 8, **caractérisé en ce qu'**une intervention de régulation, une intervention de freinage automatique d'une fonction de régulation dans le véhicule, l'activation d'un témoin d'alarme ou un message d'erreur sont configurables en tant qu'événement.

10. Dispositif de diagnostic (7) comprenant un logiciel d'application destiné à la mise en œuvre du procédé de réglage de fonctions configurables d'un appareil de commande électronique dans un véhicule selon l'une des revendications précédentes, dans lequel les fonctions configurables comprennent la fourniture en sortie d'un signal de sortie qui peut être déterminé par la configuration en fonction de signaux d'entrée configurables, de telle sorte que des signaux d'entrée d'une fonction configurable à prendre en compte pour déterminer le signal de sortie peuvent être sélectionnés par l'utilisateur parmi une gamme de signaux d'entrée de l'appareil de commande électronique, dans lequel le signal de sortie est déterminé automatiquement par un dispositif informatique au moyen de combinaisons configurables entre les signaux d'entrée, et dans lequel un critère de temps et/ou un critère de vitesse peut être associé à un signal d'entrée au moyen de la configuration, et la détermination du signal de sortie est effectuée en tenant compte du critère de temps.

11. Appareil de commande électronique (3) comprenant une chaîne de fonctions logiques mises en œuvre par le constructeur, qui est configurable par le procédé de réglage de fonctions configurables d'un appareil de commande électronique dans un véhicule selon l'une des revendications précédentes, dans lequel les fonctions configurables comprennent la fourniture en sortie d'un signal de sortie qui peut être déterminé par la configuration en fonction de signaux d'entrée configurables, de telle sorte que les signaux d'entrée d'une fonction configurable à prendre en compte pour déterminer le signal de sortie peuvent être sélectionnés par l'utilisateur parmi une gamme de signaux d'entrée de l'appareil de commande électronique, dans lequel le signal de sortie est déterminé automatiquement par un dispositif informatique au moyen de combinaisons configurables entre les signaux d'entrée, et dans lequel un critère de temps et/ou un critère de vitesse peut être associé à un signal d'entrée au moyen de la configuration, et la détermination du signal de sortie est effectuée en tenant compte du critère de temps.

12. Appareil de commande électronique (3) destiné à un véhicule, comprenant une mémoire (6) destinée à stocker des données de fonctionnement du véhicule ou de composants du véhicule, **caractérisé en ce que** des signaux d'entrée et/ou des signaux internes et/ou des signaux de sortie de l'appareil de commande peuvent être stockés en tant que données de fonctionnement, dans lequel l'événement déclenchant le stockage est configurable par un utilisateur sous la forme d'une combinaison d'une sélection de signaux d'entrée et/ou de signaux internes et/ou de signaux de sortie.

13. Appareil de commande électronique (3) selon la revendication 12, **caractérisé en ce que** les données de fonctionnement devant être stockées sont configurables par un utilisateur.

14. Appareil de commande électronique (3) selon la revendication 12 ou 13, **caractérisé en ce qu'**une intervention de régulation, une intervention de freinage automatique d'une fonction de régulation dans le véhicule, l'activation d'un témoin d'alarme ou un message d'erreur sont configurables en tant qu'événement.

15. Appareil de commande électronique (3) selon l'une des revendications 11 à 14, **caractérisé en ce que** l'appareil de commande (3) fait partie d'un système de freinage d'un véhicule tracteur (1) ou d'une remorque de véhicule utilitaire (2).
